# EUROPEAN PATENT APPLICATION

(11) **EP 2 211 539 A2**
(43) Date of publication of application: **28.07.2010**
(21) Application number: 09155260.4
(22) Date of filing: 16.03.2009
(51) Int. Cl.: H04N 5/445

(54) **Method For Displaying a Widget and a Broadcast Receiving Apparatus Thereof**

(30) Priority: 23.01.2009 KR 20090006242
(71) Applicant: Samsung Electronics Co., Ltd., Suwon-si, Gyeonggi-do 442-742 (KR)
(72) Inventor: CHOI, Chang-ki, Seoul (KR)
(74) Representative: Robinson, Ian Michael

(57) **Abstract**

A method for displaying a widget and a broadcast receiving apparatus thereof are provided. The apparatus includes an information receiving unit which receives information for at least one widget, a broadcast receiving unit which receives a broadcast signal, a signal processing unit which processes the broadcast signal to obtain a video signal and an audio signal, a storage unit which stores the information for the at least one widget and category information of the at least one widget, a control unit which determines which is a current category and controls the display unit to display an icon of a widget in the current category, an on-screen display (OSD) generating unit which generates the icon of the widget in the current category, a display unit which displays an image corresponding to the video signal and the icon of the widget in the current category, and a speaker which output a sound corresponding to the audio signal.

## Description

### BACKGROUND OF THE INVENTION

### 1. Field of the Invention

Methods and apparatuses consistent with the present invention relate to displaying a widget, and more particularly, to a method for displaying a widget in a category which meets a display condition and a broadcast receiving apparatus thereof.

### 2. Description of the Related Art

A widget is a graphic user interface (GUI) tool which displays specific information received from an external source. Weather, news, stock market, time, popular key words, and advertisement are examples of the specific information. Nowadays, the widget is used in a personal computer sometimes.

As a digital broadcast service begins, a television which is able to display the digital broadcast has equipped devices, such as an enough memory, an on-screen display (OSD) generator, and data receiving unit which receives information for a widget, for displaying the widget.

There are many kinds of widgets related to a broadcast program. However, a user does not need all the widgets at every moment. So it is desirable to select widgets which need to be displayed at certain condition.

### SUMMARY OF THE INVENTION

An aspect of the present invention is to provide a broadcast receiving apparatus which changes widgets to be displayed according to a display condition about categories of the widgets.

According to an aspect of the invention, there is provided a broadcast receiving apparatus comprising an information receiving unit which receives information for at least one widget, a broadcast receiving unit which receives a broadcast signal, a signal processing unit which processes the broadcast signal to obtain a video signal and an audio signal, a storage unit which stores the information for the at least one widget and category information of the at least one widget, a control unit which determines which is a current category and controls the display unit to display an icon of a widget in the current category, an on-screen display (OSD) generating unit which generates the icon of the widget in the current category, a display unit which displays an image corresponding to the video signal and the icon of the widget in the current category, and a speaker which output a sound corresponding to the audio signal. The OSD generating unit may generate a menu for setting display condition of widgets.

The broadcast receiving apparatus may further comprise a user input unit which receives a channel change command, a setting command for display condition of the widgets and a selection command for one of the icon of the widget in the current category. The menu for setting display condition of widgets may provide on and off options for a basic category in which widgets do not depend on any condition. If an icon of a widget in the current category is selected, the OSD generating unit may generate a widget corresponding to the selected icon using the information for the widget stored in the storage unit and the display unit displays the generated widget. The at least one widget may be categorized by sex, time, or a kind of channel to which the at least one widget is related. The signal processing unit may comprise a demultiplexer which separates the video signal, the audio signal, and data including information for at least one widget from the broadcast signal and sends the data to the storage unit.

According to an aspect of the invention, there is provided a broadcast receiving apparatus comprising an information receiving unit which receives information for at least one widget, a broadcast receiving unit which receives a broadcast signal, a signal processing unit which processes the broadcast signal to obtain a video signal and an audio signal, a storage unit which stores the information for the at least one widget and category information of the at least one widget, a control unit which determines which is a current category and controls the display unit to display a widget in the current category, an on-screen display (OSD) generating unit which generates the widget in the current category using the information for the widget stored in the storage unit, a display unit which displays an image corresponding to the video signal and the widget in the current category, and a speaker which output a sound corresponding to the audio signal.

The OSD generating unit may generate a menu for setting display condition of widgets.
The broadcast receiving apparatus may further comprise a user input unit which receives a channel change command and a setting command for display condition of the widgets. The menu for setting display condition of widgets may provide on and off options for a basic category in which widgets do not depend on any condition. The at least one widget may be categorized by sex, time, or a kind of channel to which the at least one widget is related. The signal processing unit may comprise a demultiplexer which separates the video signal, the audio signal, and data including information for at least one widget from the broadcast signal and sends the data to the storage unit.

According to an aspect of the invention, there is provided a method for displaying a widget which comprises checking whether there is a change in a current category of a widget, displaying an icon of a widget in the changed category if there is a change in the current category, and displaying a widget corresponding to the icon using information for the widget if the icon of the widget is selected. The method for displaying a widget may further comprise receiving the information for the widget from an external network or a broadcast signal. The widget may be categorized by sex, time, or a kind of channel to which the widget is related.

According to an aspect of the invention, there is provided a method for displaying a widget which comprises checking whether there is a change in a current category of a widget; and displaying a widget in the changed category using information for the widget if there is a change in the current category. The method for displaying a widget may further comprise receiving the information for the widget from an external network or a broadcast signal. The widget may be categorized by sex, time, or a kind of channel to which the widget is related.

According to an aspect of the invention, there is provided a method for displaying a widget which comprise enrolling categories of widgets, setting in which display condition the categories of the widgets to be displayed is changed, and displaying at least one widget in a category which meets the display condition.

### BRIEF DESCRIPTION OF THE DRAWINGS

The above and other aspects and features of the present invention will be apparent from the following detailed description of exemplary embodiments taken in conjunction with the accompanying drawings, in which:
FIG. 1 illustrates a block diagram of a broadcast receiving apparatus according to an exemplary embodiment of the invention;
FIG. 2 illustrates a block diagram of a broadcast receiving apparatus according to other exemplary embodiment of the invention;
FIG. 3 illustrates a diagram for enrolling a category of a widget and setting a display condition according to an exemplary embodiment of the invention;
FIG. 4 illustrates a category table of widgets according to an exemplary embodiment of the invention;
FIG. 5 illustrates a menu for setting display condition of widgets according to an exemplary embodiment of the invention;
FIG. 6A to 6E illustrate screens of a broadcast receiving apparatus in which widgets are displayed according to an exemplary embodiment of the invention; and
FIG. 7 illustrates a flow chart of method for displaying a widget according to an exemplary embodiment of the invention.

### DETAILED DESCRIPTION OF EXEMPLARY EMBODIMENTS OF THE INVENTION

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but can be implemented in diverse forms. The matters defined in the description, such as the detailed construction and elements, are merely specific details provided to assist those of ordinary skill in the art in a comprehensive understanding of the invention, and the present invention is only defined within the scope of the appended claims.

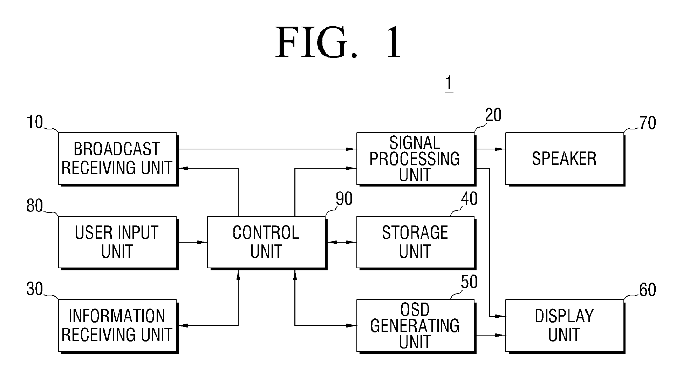

FIG. 1 illustrates a block diagram of a broadcast receiving apparatus 1 according to an exemplary embodiment of the invention. Referring to FIG. 1, the broadcast receiving apparatus 1 includes a broadcast receiving unit 10, a signal processing unit 20, an information receiving unit 30, a storage unit 40, an on screen display (OSD) generating unit 50, a display unit 60, a speaker 70, a user input unit 80, and a control unit 90.

The broadcast receiving unit 10 may include a tuner and a demodulator. If a user selects a broadcast channel using the user input unit 80, the broadcast receiving unit 10 tunes a broadcast signal of the selected broadcast channel, which may be an analog broadcast signal or a digital broadcast signal, and demodulates the tuned broadcast signal. The broadcast receiving unit 10 may receive the broadcast signal through a cable, a terrestrial antenna, or a satellite.

The signal processing unit 20 processes the demodulated broadcast signal to obtain a video signal and an audio signal of the selected broadcast channel and sends the video signal to the display unit 60 and the audio signal to the speaker 70. In an embodiment, the video signal and the audio signal are extracted from the demodulated broadcast signal.

The information receiving unit 30 receives information for a widget, which is displayed on the widget, information such as weather, news, stock market, an advertisement, caption for a selected broadcast program, an image or shopping information related to the selected broadcast program, etc. The information receiving unit 30 may receive the information for a widget from the selected broadcast signal or an external network such as Internet.

The storage unit 40 stores the broadcast signal, the information for a widget, OSD data for the widget which is data related to a frame, color, a font, and icons of the widget, category information of the widget, OSD data of a menu for setting display condition of widgets, and user's setting for display condition of widgets.

The OSD generating unit 50 provides a menu for setting display condition of widgets and a user sets a display condition for widgets through the menu. If a display condition for displaying a widget is set to be ON, the OSD generating unit 50 generates the icon representing the widget. If a user selects the icon, the OSD generating unit 50 generates the widget corresponding to the selected icon using the stored information for the widget and the OSD data for the widget. The widget display the information associated with the widget. For example, the widget displays the news received through the information receiving unit 30 if the widget is a news widget. The displayed widget uses the frame, the color, the font in the OSD data for the widget.

The display unit 60 displays the menu for setting display condition of widgets if a user selects the menu. The display unit 60 displays the video signal of the selected broadcast channel and icons of widgets of which conditions for displaying are set to be ON. If a user selects an icon among the displayed widget icons, the display unit 60 displays the widget corresponding to the selected icon, which is generated by the OSD generating unit 50.

The speaker 70 outputs sound corresponding to the audio signal of the selected broadcast channel.

The user input unit 80 may be implemented as a remote controller, a keyboard, a keypad or touch screen type graphic keys. A user may select a broadcast channel using the user input unit 80. A user may set the display condition for widgets using the user input unit 80 and the menu for setting display condition of widgets. If a user selects an icon among the displayed widget icons using the user input unit 80, the display unit 60 displays the widget corresponding to the selected icon.

The control unit 90 controls the broadcast receiving unit 10 to tune the broadcast channel corresponding to the channel a user selects using the user input unit 80, the signal processing unit 20 to obtain the video signal and the audio signal for the selected broadcast program, the information receiving unit 30 to receive information for a widget and send the received information to the storage unit 40, the storage unit 40 to store the broadcast signal, the information for a widget, OSD data of a menu for setting display condition of widgets, OSD data for the widget, and user's setting for display condition of widgets, the OSD generating unit 50 to generate a menu for setting display condition of widgets, icons representing widgets, and widgets.

The exemplary embodiment, which uses icon representing the widget and displays the widget corresponding to the icon if a user selects the icon, is shown. However, other exemplary embodiment which displays the widget directly instead of the icon is possible.

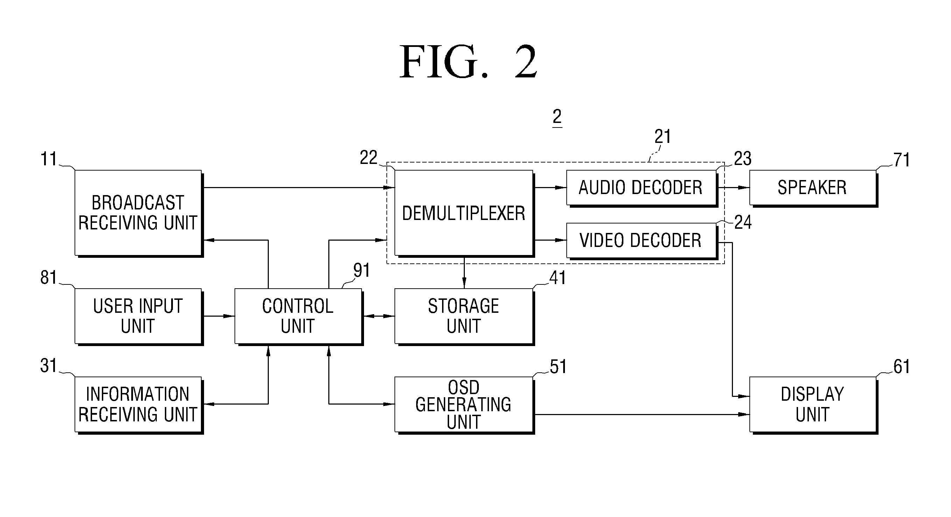

FIG. 2 illustrates a block diagram of a broadcast receiving apparatus 2 according to other exemplary embodiment of the invention. Referring to FIG. 2, the broadcast receiving apparatus 2 includes a broadcast receiving unit 11, a signal processing unit 21, an information receiving unit 31, a storage unit 41, an OSD generating unit 51, a display unit 61, a speaker 71, a user input unit 81, and a control unit 91.

The broadcast receiving unit 11, the storage unit 41, the OSD generating unit 51, the display unit 61, the speaker 71, the user input unit 81, and the control unit 91 perform same or similar functions as corresponding units of the broadcast receiving apparatus 1.

The signal processing unit 21 includes a demultiplexer 22, an audio decoder 23, and a video decoder 24.

The demultiplexer 22 separates the demodulated broadcast signal into an audio part, a video part, and a data part. The demultiplexer 22 sends the separated audio part to the audio decoder 23, the separated video part to the video decoder 24, the separated data part to the storage unit 41.

The audio decoder 23 decodes the separated audio part to obtain an audio signal of the selected broadcast program and sends the decoded audio signal to the speaker 71.

The video decoder 24 decodes the separated video part to obtain a video signal of the selected broadcast program and sends the decoded video signal to the display unit 61.

In the separated data part, the information for a widget may be included in this exemplary embodiment. The broadcast receiving apparatus 2 may receive the information for a widget from an external network through the information receiving unit 31 and from the selected broadcast signal through the demultiplexer 22.

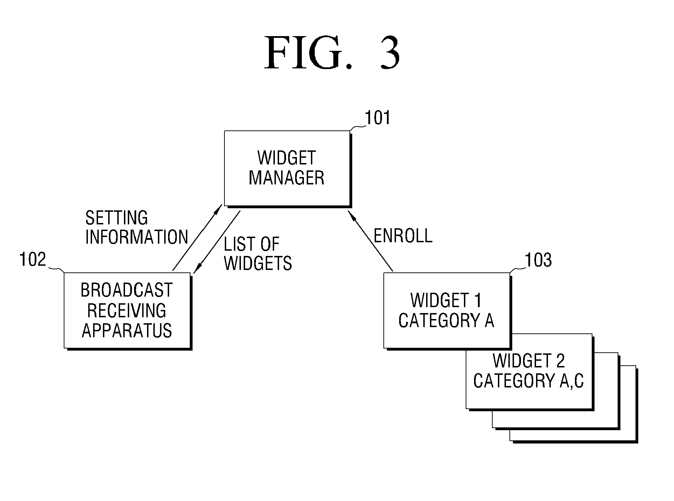

FIG. 3 illustrates a diagram for enrolling a category of a widget and setting a display condition according to an exemplary embodiment of the invention.

A widget has its own category information. Widgets 103 enroll their own categories to a widget manager 101. A widget may have a plurality of categories. If a user chooses which widget is displayed at a predetermined condition using the menu for setting display condition of widgets, a broadcast receiving apparatus 102 sends the setting information about display condition of widgets to the widget manager 101. The widget manager 101 sends a list of widgets which include the display condition "ON" to the broadcast receiving apparatus 102. The broadcast receiving apparatus 102 displays icons for the widgets or widgets themselves in the list of widgets.

The widget manager 101 may be a software program stored in the broadcast receiving apparatus 102. The control unit in the broadcast receiving apparatus 102 may execute the widget manager 101.

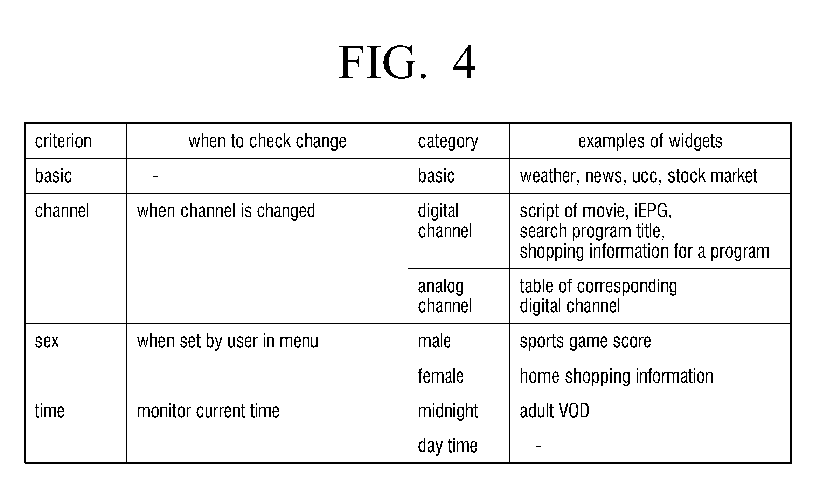

FIG. 4 illustrates a category table of widgets according to an exemplary embodiment of the invention.

The table shows kinds of criteria, when to check change of categories, kinds of categories for the criteria, and examples of widgets corresponding to the categories. Widgets in the 'basic' criteria do not depend on the type of or any change in the category applicable for these widgets. Examples of widgets in this category include weather, news, user created contents (UCC), and a stock market. The 'channel' criterion may have two categories 'digital channel' and 'analog channel'. The categories are checked whenever a user changes a channel. The widgets for the digital channel and the analog channel may be different. Script of a movie, internet electronic program guide (iEPG), search menu for a program title, shopping information for a program may be examples of the widgets for digital channels.

Table of digital channels corresponding to the analog channels may be an example of the widgets for analog channels. 'Sex' may be one of the criteria. A user may input the user's sex information in the menu for setting display condition of widgets. If a user chose 'male', a widget for men, for example sports game score, may be displayed. If a user chose 'female', a widget for women, for example home shopping information, may be displayed.

'Time' also may be a criterion. If a user wants to see a widget for midnight category, the user may set a time option in the menu for setting display condition of widgets. The broadcast receiving apparatus checks whether current time is midnight. The invention is not limited to the examples above. The invention may have more criterion and more categories as an exemplary embodiment.

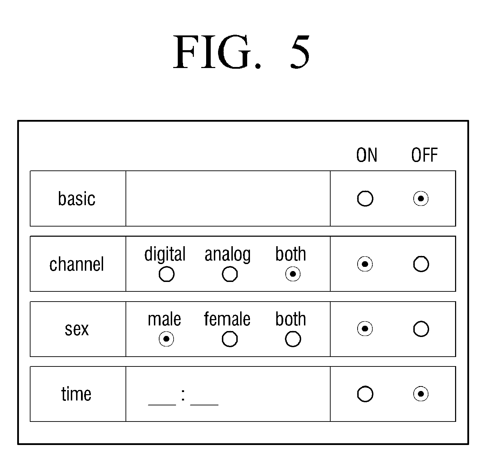

FIG. 5 illustrates a menu for setting display condition of widgets according to an exemplary embodiment of the invention.

The menu for setting display condition of widgets may provide a user 'ON' and 'OFF' options and options for choosing categories for each criterion. If a user chooses an ON option for the basic category, the widgets included in the basic category are always displayed. A user may select an OFF option for the basic category so that the widgets in the basic cateogory are not displayed. A user may choose widgets for digital channels, analog channels, or both kinds of channels with an ON option. A user may choose widgets for male, female, or both with an ON option. A user may input time for the time categories. The invention is not limited to this exemplary embodiment. The menu may include other criteria, provide a user a method for choosing both the digital and analog categories instead of the 'both' option, provide a user options for choosing among predetermined times instead of a numerical input or provide a user options for choosing each widget instead of choosing a category.

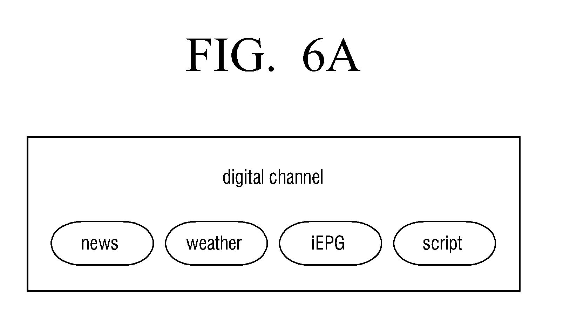

FIG. 6A to 6E illustrate screens of a broadcast receiving apparatus in which widgets are displayed according to an exemplary embodiment of the invention.

FIG. 6A illustrates screen of the broadcast receiving apparatus in the case where some widgets in the 'basic' category and the 'digital channel' category are chosen in the menu for setting display condition of widgets. The screen displays a program of the selected digital channel, icons for a news widget and a weather widget of the basic category, and icons for an iEPG widget and a script widget of the digital channel category. The icons may be overlapped with the program.

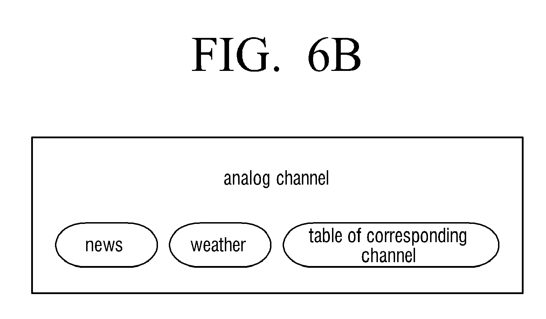

FIG. 6B illustrates screen of the broadcast receiving apparatus in the case where some widgets in the 'basic' category and the 'analog channel' category are chosen in the menu for setting display condition of widgets. The screen displays a program of the selected analog channel, icons for some widgets of the basic category, and an icon for a widget related to a table of corresponding digital channel of the analog channel category. If a user changes a selected channel from a digital channel to an analog channel, the icons displayed on the screen are also changed according to user's setting in the menu.

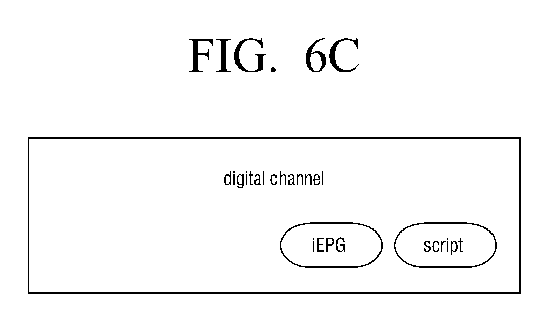

FIG. 6C illustrates screen of the broadcast receiving apparatus in the case where 'OFF' option for the 'basic' category and 'ON' option for some widgets in the 'digital channel' category are chosen in the menu for setting display condition of widgets. The screen displays a program of the selected digital channel, and icons for an iEPG widget and a script widget of the digital channel category without icons for widgets of the basic category.

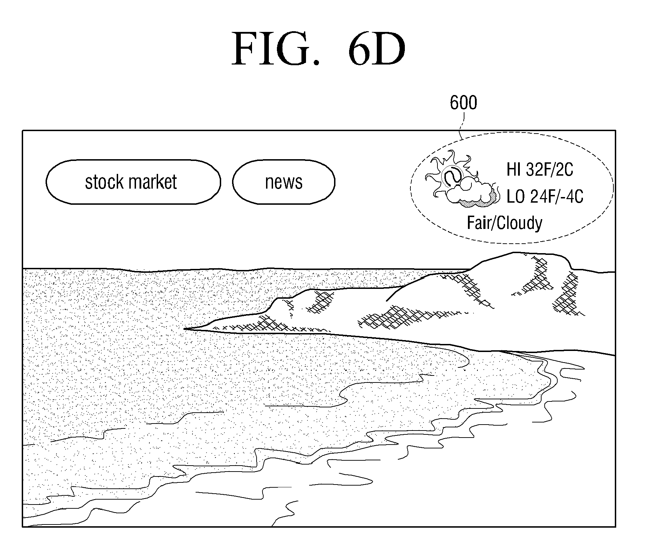

FIG. 6D illustrates screen of the broadcast receiving apparatus in the case where a user chooses a weather icon of the 'basic' category. The screen displays a program of the selected channel, news and stock market icons of the basic category, and a weather widget 600 of the basic category. After a user chooses the weather icon, the icon may be changed to a corresponding widget for the weather icon.

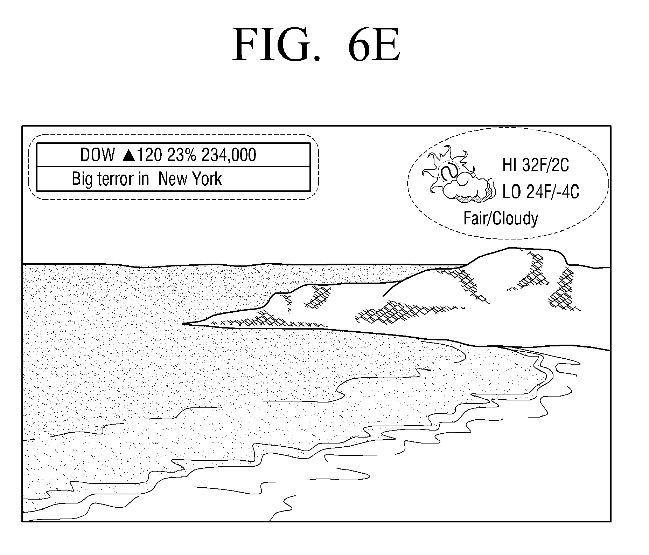

FIG. 6E illustrates screen of the broadcast receiving apparatus in the case where the screen displays the stock and the news widgets themselves instead of icons corresponding to the stock and the news widgets.

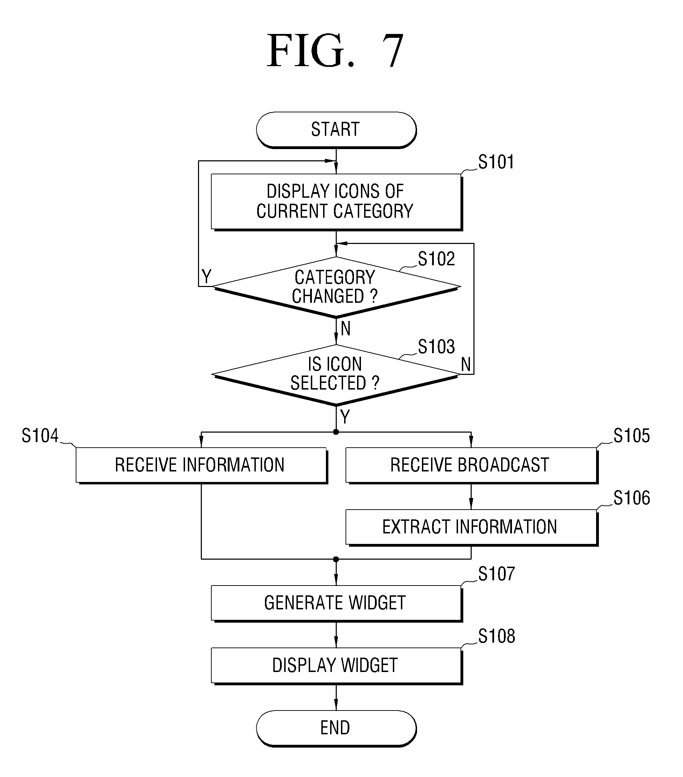

FIG. 7 illustrates a flow chart of method for displaying a widget according to an exemplary embodiment of the invention.

A broadcast receiving apparatus displays icons for widgets of a current category (S101).
The broadcast receiving apparatus checks whether the current category is changed (S102). If the current category is changed (S102-Y), the broadcast receiving apparatus displays icons for widgets of the new current category. If an icon which is displayed on the broadcast receiving apparatus is selected (S103-Y), the broadcast receiving apparatus receives information for widgets through an information receiving unit (S104) and a broadcast signal through a broadcast receiving unit (S105) and extracts information for widgets from the received broadcast signal (S106). The broadcast receiving apparatus generates a widget using the information for widgets received through the broadcast receiving unit and extracted from the broadcast signal and OSD data for the widget which is data related to a frame, color, a font, and icons of the widget (S107). The broadcast receiving apparatus displays the generated widget (S108).

In this embodiment, the case where the information for widgets is received from the information receiving unit and the broadcast signal is explained. However, other embodiment in which the information for widgets is received from one of the information receiving unit and the broadcast signal is possible.

In this embodiment, the case where the broadcast receiving apparatus receives the information for widgets after an icon is selected is explained. However, other embodiment in which the broadcast receiving apparatus receives the information for widgets in advance is possible.

Although exemplary embodiments of the present invention have been described for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus (1) comprising:
an information receiving unit (30) which receives information for at least one widget;
a broadcast receiving unit (10) which receives a broadcast signal;
a signal processing unit (20) which processes the broadcast signal to obtain a video signal and an audio signal;
a storage unit (40) which stores the information for the at least one widget and category information of the at least one widget;
a control unit (90) which determines a current category;
an on-screen display (OSD) generating unit (50) which generates one widget of the at least one widget, if the one widget is in the current category; and
a display unit (60) which displays an image corresponding to the video signal and the one widget in the current category, the display unit (60) being controlled by the control unit (90) to display the one widget in the current category.

2. The broadcast receiving apparatus (1) of claim 1, wherein the OSD generating unit (50) generates a menu for setting display conditions of widgets.

3. The broadcast receiving apparatus (1) of claim 2, further comprising a user input (80) unit which receives a channel change command and a setting command for display conditions of the widgets.

4. The broadcast receiving apparatus (1) of claim 2 or 3, wherein the menu for setting display conditions of widgets provides an ON option and an OFF option for a basic category, and widgets of the basic category do not depend on any other category.

5. The broadcast receiving apparatus (1) of any of claims 1 to 4, wherein the on-screen display generating unit (50) which generates an icon of the one widget of the at least one widget in the current category using the information for the one widget stored in the storage unit (40), if the one widget is in the current category, and
the display unit (60) which displays the icon of the one widget in the current category, the display unit (60) being controlled by the control unit to display the icon.

6. The broadcast receiving apparatus (1) of claim 5, wherein if the icon of the one widget in the current category is selected, the OSD generating unit (50) generates the one widget corresponding to the selected icon using the information for the one widget stored in the storage unit (40) and the display unit (60) displays the generated one widget.

7. The broadcast receiving apparatus (1) of any of claims 1 to 6, wherein the at least one widget is categorized by sex, time, or a kind of channel to which the at least one widget is related.

8. The broadcast receiving apparatus (1) of any of claims 1 to 7, wherein the signal processing unit (20) comprises a demultiplexer which separates the video signal, the audio signal, and data including information for the at least one widget from the broadcast signal and sends the data to the storage unit (40).

9. A method for displaying a widget, comprising:
checking whether there is a change in a current category of a first widget; and
displaying a second widget in the changed category using information for the second widget if there is the change in the current category.

10. The method for displaying a widget of claim 9, further comprising:
receiving the information for the second widget from an external network or a broadcast signal.

11. The method for displaying a widget of claim 9 or 10, wherein the second widget is categorized by sex, time, or a kind of channel to which the second widget is related.

12. The method for displaying a widget of any of claims 9 to 11, wherein the displaying comprises:
displaying an icon of the second widget in the changed category if there is the change in the current category; and
displaying the second widget corresponding to the icon using information for the second widget if the icon of the second widget is selected.

13. The method for displaying a widget of any of claims 9 to 12, further comprising:
enrolling categories of widgets; and
changing display conditions of the categories of the widgets to be displayed,
wherein the displaying displays at least one widget in a category which includes a display condition to display the at least one widget.
